# EUROPÄISCHE PATENTANMELDUNG

(11) **EP 2 642 101 A1**
(43) Veröffentlichungstag der Anmeldung: **25.09.2013**
(21) Anmeldenummer: 12160267.6
(22) Anmeldetag: 20.03.2012
(51) Int. Cl.: F02C 9/28, F01D 17/08

(54) **Verfahren zur Bestimmung der Lebenszeit einer Gasturbine**

(71) Anmelder: Alstom Technology Ltd, 5400 Baden (CH)
(72) Erfinder: Fischer, Jochem, 5417 Untersiggenthal (CH); Kramer, Thomas, 5408 Ennetbaden (CH); Busekros, Armin, 8049 Zürich (CH)

(57) **Zusammenfassung**

Bei einem Verfahren zur Bestimmung der Lebensdauer einer Gasturbine oder einzelner Komponenten, bei welchem Verfahren Faktoren bestimmt werden, welche die verschiedenen Belastungen der Gasturbine während des Betriebs berücksichtigen und eine Umwandlung der gemessenen Betriebsdauer in eine die Belastungen widerspiegelnde effektive Betriebsdauer ermöglichen, wird eine präzisere Aussage dadurch erreicht, dass zur Bestimmung der Lebensdauer Faktoren (PF) verwendet werden, welche ihrerseits von mehreren anderen Grössen (T_{amb}, TK2" LG) abhängen.

## Beschreibung

### Technisches Gebiet

Die vorliegende Erfindung bezieht sich auf das Gebiet der Technik von Gasturbinen. Sie betrifft ein Verfahren zur Bestimmung der Lebenszeit einer Gasturbine gemäss dem Oberbegriff des Anspruchs 1.

### Stand der Technik

Es ist aus dem Stand der Technik bekannt, Gasturbinen eine Kenngrösse zuzuordnen, welche die verschiedenen, im Betrieb auftretenden Belastungen der Gasturbine berücksichtigt und als Anzahl der äquivalenten Betriebsstunden (Equivalent Operating Hours: EOH) bezeichnet wird. In den EOH-Wert gehen u.a. ein die Anzahl der Betriebsstunden bei Grundlast und Volllast, die Anzahl der Starts, die Anzahl der schnellen Lastwechsel, die Anzahl der schnellen Temperaturwechsel, etc.

Die zugehörigen Zahlen bzw. Zeiten werden mit geeigneten Faktoren multipliziert und dann aufsummiert, um eine für die Lebensdauer bzw. Wartungsintervalle der Gasturbine wichtige "effektive" Betriebsdauer zu bestimmen, die aufgrund der verschiedenartigen Belastungen deutlich über der einfachen Zahl der Betriebsstunden liegen kann. In der Literatur wird dazu eine Formel angegeben, welche die folgende Gestalt hat:
Als massgebliche Größe der Festlegung der Wartungsstillstände kann beispielsweise eine effektive Betriebsdauer (Abk.: EOH) dienen, die mittels empirischer Formeln berechnet wird. Folgende Eingangsgrössen sind denkbar:
   - die Betriebsstunden der Turbinenanlage (Abkürzung: OH);
   - so genannte dynamische Stunden (Abkürzung: Dyn H), also die Betriebsstunden, während denen die Turbinenanlage großen Betriebszustandsänderungen ausgesetzt wird (die mit großen Belastungsänderungen, insbesondere thermischen Belastungsänderungen an den Komponenten der Turbinenanlage verbunden sind);
   - und die Anzahl der Turbinenstarts einfliessen;
wobei jeweils die Anzahl (n) eines bestimmten Ereignisses mit einem zugehörigen Faktor (a) und die Zeitdauer (t) eines bestimmten Betriebszustandes der Gasturbine mit einem zugehörigen Faktor (b) in Rechnung gesetzt werden.

Nicht berücksichtigt wird bei dieser linearen Art der Lebensdauer-Bestimmung jedoch die gegenseitige Beeinflussung und Abhängigkeit unterschiedlicher Belastungs-Effekte, die sich letztlich in einer Abhängigkeit der einzelnen Faktoren in der obigen Gleichung von anderen Faktoren oder Summanden der Summe niederschlagen würden.

### Darstellung der Erfindung

Es ist daher eine Aufgabe der Erfindung, eine verbesserte Bestimmung der Lebenszeit einer Gasturbine zu ermöglichen.

Diese und andere Aufgaben werden durch die Gesamtheit der Merkmale des Anspruchs 1 gelöst.

Bei dem erfindungsgemässen Verfahren zur Bestimmung der Lebensdauer einer Gasturbine oder einzelner Komponenten werden Faktoren bestimmt, welche die verschiedenen Belastungen der Gasturbine während des Betriebs berücksichtigen und eine Umwandlung der gemessenen Betriebsdauer in eine die Belastungen widerspiegelnde effektive Betriebsdauer ermöglichen, wobei zur Bestimmung der Lebensdauer Faktoren (PF, EST) verwendet werden, welche ihrerseits von mehreren anderen Grössen (T_{amb}, TK2, LG, F1, F2, F3) abhängen.

Eine Ausgestaltung der Erfindung ist dadurch gekennzeichnet, dass zur Bestimmung der Lebensdauer ein Schädigungs- oder Penalty-Faktor (PF) verwendet wird, welcher nach Art eines Kennfeldes von wenigstens zwei anderen Grössen abhängt.

Insbesondere hängt der Schädigungs- oder Penalty-Faktor (PF) vom Lastgradienten (LG) der Gasturbine bis Teillast oder Volllast, der Umgebungstemperatur (T_{amb}) und/oder einer Metalltemperatur in der Gasturbine bzw. der Kompressorendtemperatur (TK2) ab.

Eine andere Ausgestaltung der Erfindung ist dadurch gekennzeichnet, dass das Kennfeld numerisch bestimmt wird.

Eine weitere Ausgestaltung der Erfindung ist dadurch gekennzeichnet, dass aufgrund des Schädigungs- oder Penalty-Faktors (PF) die Restlebensdauer der Gasturbine abgeschätzt wird, wobei ein gleicher oder ähnlicher zukünftiger Betrieb der Gasturbine vorausgesetzt wird.

Eine wieder andere Ausgestaltung der Erfindung ist dadurch gekennzeichnet, dass aufgrund des Schädigungs- oder Penalty-Faktors (PF) die verbrauchte Lebensdauer exakt bestimmt wird.

Insbesondere kann das Kennfeld in einem Stundenzähler der Gasturbine hinterlegt werden.

Eine andere Ausgestaltung der Erfindung ist dadurch gekennzeichnet, dass zur Bestimmung der Lebensdauer ein Äquivalenter Start-Faktor verwendet wird, welcher von wenigstens drei anderen Faktoren abhängt.

Insbesondere ist der Äquivalente Start-Faktor ein Produkt der anderen Faktoren.

Eine weitere Ausgestaltung der Erfindung ist dadurch gekennzeichnet, dass der erste der wenigstens drei Faktoren von der Umgebungstemperatur oder der Kompressorendtemperatur abhängt.

Eine andere Ausgestaltung der Erfindung ist dadurch gekennzeichnet, dass der zweite der wenigstens drei Faktoren vom Lastgradienten der Gasturbine abhängt.

Eine noch andere Ausgestaltung der Erfindung ist dadurch gekennzeichnet, dass der dritte der wenigstens drei Faktoren vom verwendeten Material abhängt.

### Kurze Erläuterung der Figuren

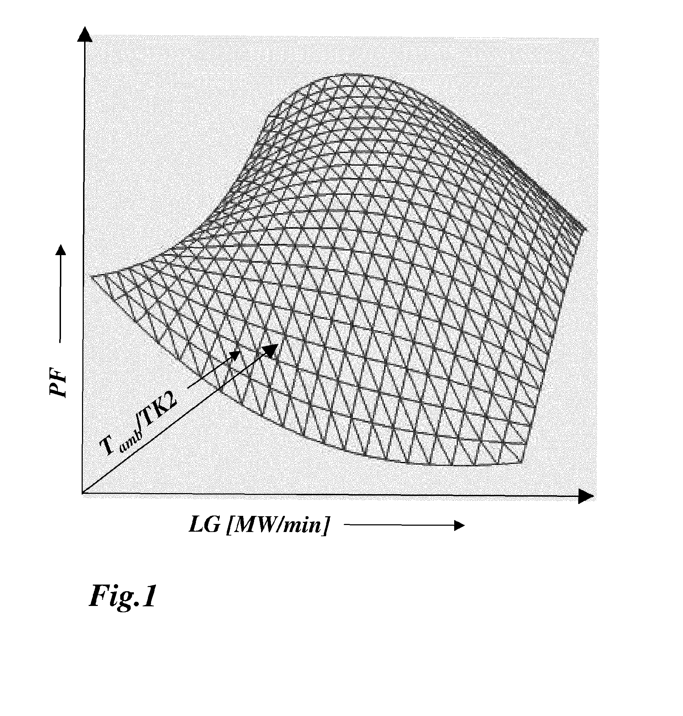

Die Erfindung soll nachfolgend anhand von Ausführungsbeispielen im Zusammenhang mit der Zeichnung näher erläutert werden. Es zeigt
- Fig. 1: ein beispielhaftes Kennfeld für den Penalty-Faktor PF in Abhängigkeit vom Lastgradienten LG und bestimmten Temperaturen.

### Wege zur Ausführung der Erfindung

Gemäss einer Ausgestaltung der Erfindung wird ein Kennfeld vorgeschlagen, um die Lebensdauer von Gasturbinenkomponenten (speziell vom Rotor) bis zum nächsten Inspektionsintervall oder über die Gesamtlebensdauer abzuschätzen.

Je nach Art des Betriebsfalles wird nach Massgabe des Lastgradienten der Maschine (in MW/min) bis Teillast oder Volllast, der Metalltemperatur der Komponente (oder der Kompressorendtemperatur TK2), und der Aussentemperatur (T_{amb}) ein Schädigungsfaktor (Penalty-Faktor PF) aus einem entsprechendem Kennfeld, was numerisch bestimmt werden kann, abgeleitet (siehe Fig. 1).

Aufgrund dieses Faktors kann a priori die Restlebensdauer abgeschätzt werden, unter der Annahme gleichen oder ähnlichen Betriebes. Parallel ist die verbrauchte Lebensdauer exakt bestimmt.

Auch ist eine a-posteriori-Abschätzung der zu erwartenden Lebensdauer möglich.

Aufgrund von thermo-mechanischen Berechnungen im Vorfeld kann dieses Kennfeld in einem Stundenzähler der Maschine hinterlegt werden.

Gemäss einer anderen Ausgestaltung der Erfindung kann ein Äquivalenter Start-Faktor (EST) definiert werden, der zur bekannten Anzahl der äquivalenten Betriebsstunden (EOH) vergleichbar ist.

Da der Einfluss eines Starts auf die Lebensdauer von mehreren Faktoren abhängt, müssen für den EST wenigstens drei Faktoren F1, F2 und F3 berücksichtigt werden. Der EST ist dabei vorzugsweise das Produkt aus diesen wenigstens drei Faktoren (EST=F1 x F2 x F3).

Der Faktor F1 hängt von der Umgebungstemperatur (T_{amb}) ab. Alternativ dazu kann aber auch die Kompressorendtemperatur TK2 oder eine andere aussagekräftige Temperatur genommen werden).

Der Faktor F2 hängt von der Temperatur der Maschine beim Start ab (d.h. davon, ob die Maschine kalt, warm oder heiss ist). Dabei können zwei Fälle unterschieden werden, nämlich ein Schnellstart mit einem grossen Lastgradienten (x MW/min), und ein normaler Start mit einem kleineren Lastgradienten (y MW/min; y<x).

Der Faktor F3 hängt vom Material der entsprechenden Komponente bzw. Ausrüstung ab.

Es versteht sich von selbst, dass noch weitere Faktoren in den EST eingehen können, um alle relevanten Abhängigkeiten zu erfassen bzw. zu beschreiben.

Insgesamt können durch die Erfindung der Lebensdauer-Verbrauch genauer bestimmt und Wartungs- bzw. Ausfallintervalle präziser vorhergesagt werden.

## Patentansprüche

1. Verfahren zur Bestimmung der Lebensdauer einer Gasturbine oder einzelner Komponenten, bei welchem Verfahren Faktoren bestimmt werden, welche die verschiedenen Belastungen der Gasturbine während des Betriebs berücksichtigen und eine Umwandlung der gemessenen Betriebsdauer in eine die Belastungen widerspiegelnde effektive Betriebsdauer ermöglichen, **dadurch gekennzeichnet, dass** zur Bestimmung der Lebensdauer Faktoren (PF, EST) verwendet werden, welche ihrerseits von mehreren anderen Grössen (T_{amb}, TK2, LG, F1, F2, F3) abhängen.

2. Verfahren nach Anspruch 1, **dadurch gekennzeichnet, dass** zur Bestimmung der Lebensdauer ein Schädigungs- oder Penalty-Faktor (PF) verwendet wird, welcher nach Art eines Kennfeldes von wenigstens zwei anderen Grössen abhängt.

3. Verfahren nach Anspruch 2, **dadurch gekennzeichnet, dass** der Schädigungs- oder Penalty-Faktor (PF) vom Lastgradienten (LG) der Gasturbine bis Teillast oder Volllast, der Umgebungstemperatur (T_{amb}) und/oder einer Metalltemperatur in der Gasturbine bzw. der Kompressorendtemperatur (TK2) abhängt.

4. Verfahren nach Anspruch 2 oder 3, **dadurch gekennzeichnet, dass** das Kennfeld numerisch bestimmt wird.

5. Verfahren nach einem der Ansprüche 2 bis 4, **dadurch gekennzeichnet, dass** aufgrund des Schädigungs- oder Penalty-Faktors (PF) die Restlebensdauer der Gasturbine abgeschätzt wird, wobei ein gleicher oder ähnlicher zukünftiger Betrieb der Gasturbine vorausgesetzt wird.

6. Verfahren nach einem der Ansprüche 2 bis 4, **dadurch gekennzeichnet, dass** aufgrund des Schädigungs- oder Penalty-Faktors (PF) die verbrauchte Lebensdauer exakt bestimmt wird.

7. Verfahren nach einem der Ansprüche 2 bis 6, **dadurch gekennzeichnet, dass** das Kennfeld in einem Stundenzähler der Gasturbine hinterlegt wird.

8. Verfahren nach Anspruch 1, **dadurch gekennzeichnet, dass** zur Bestimmung der Lebensdauer ein Äquivalenter Start-Faktor (EST) verwendet wird, welcher von wenigstens drei anderen Faktoren (F1, F2, F3) abhängt.

9. Verfahren nach Anspruch 8, **dadurch gekennzeichnet, dass** der Äquivalente Start-Faktor (EST) ein Produkt der anderen Faktoren (F1, F2, F3) ist.

10. Verfahren nach Anspruch 8 oder 9, **dadurch gekennzeichnet, dass** der erste (F1) der wenigstens drei Faktoren von der Umgebungstemperatur (T_{amb}) oder der Kompressorendtemperatur (TK2) abhängt.

11. Verfahren nach einem der Ansprüche 8 bis 10, **dadurch gekennzeichnet, dass** der zweite (F2) der wenigstens drei Faktoren vom Lastgradienten (LG) der Gasturbine abhängt.

12. Verfahren nach einem der Ansprüche 8 bis 11, **dadurch gekennzeichnet, dass** der dritte (F3) der wenigstens drei Faktoren vom verwendeten Material abhängt.
